## Europäisches Patentamt
## European Patent Office
## Office européen des brevets

(19)

(11) Numéro de publication: **0 069 032**
**B1**

# FASCICULE DE BREVET EUROPEEN

(12)

(45) Date de publication du fascicule du brevet:
03.10.84

(21) Numéro de dépôt: 82420079.4

(22) Date de dépôt: 21.06.82

(51) Int. Cl.³: **F 16 D 59/02,** F 16 B 1/04

(54) **Dispositif de freinage de sécurité, interposé entre un arbre moteur et un organe de travail rotatif.**

(30) Priorité: 22.06.81 FR 8112564

(43) Date de publication de la demande:
05.01.83 Bulletin 83/1

(45) Mention de la délivrance du brevet:
03.10.84 Bulletin 84/40

(84) Etats contractants désignés:
**BE DE GB IT NL SE**

(56) Documents cités:
**FR - A - 2 088 016**
**FR - A - 2 099 747**
**US - A - 3 680 672**

(73) Titulaire: **MOTEURS LEROY-SOMER Société dite:,
Boulevard Marcellin Leroy, F-16000 Angouleme (FR)**

(72) Inventeur: **Morel, Louis, Au Gouyat, F-42410 Chuyer
(Loire) (FR)**

(74) Mandataire: **Maureau, Pierre, Cabinet GERMAIN &
MAUREAU Le Britannia - Tour C 20, Boulevard E.
Déruelle, F-69003 Lyon (FR)**

## Description

La présente invention a pour objet un dispositif de freinage de sécurité, interposé entre un arbre moteur et un organe de travail rotatif, entraîné à partir dudit arbre moteur.

Le but essentiel de l'invention est la mise en sécurité automatique d'un appareil ou d'une machine à mouvement rotatif, qui présente un danger évident pour les personnes si son mouvement persiste trop longtemps après l'ordre de mise à l'arrêt. Ce problème de sécurité des personnes est notamment posé dans le cas d'appareils ou de machines électroménagers ou semi-professionnels, comportant des outils rotatifs contondants ou tranchants, et pour lesquels la mise hors circuit du moteur électrique ne s'accompagne pas d'un arrêt immédiat de la rotation des outils en raison de l'inertie, le danger étant d'autant plus grand que le fonctionnement du moteur est silencieux. Les domaines d'application concernés sont, entre autres:

— les appareils alimentaires: tranche-jambon, malaxeurs, centrifugeuses,

— les machines de jardinage: tondeuses à gazon électriques, etc., et

— les machines de bricolage (petites machines à bois) ou semi-professionnelles (scies à bûches).

Les réalisations actuelles, susceptibles de ralentir et d'arrêter un organe de travail rotatif dès que l'arbre moteur n'est plus entraîné, sont des freins classiques à disque et à tambour (voir par exemple US-A N° 3680672), le freinage étant obtenu par le serrage du disque ou du tambour contre une pièce de friction. Cette dernière est appliquée sur la pièce en mouvement avec une force importante, qu'il est nécessaire de vaincre lors du défreinage. De tels dispositifs présentent pour certaines applications des inconvénients et, en particulier:

— la commande du frein possède un encombrement important (correspondant par exemple au volume d'un électro-aimant),

— le prix de revient de l'ensemble est assez élevé, et

— l'arrêt est trop brutal et peut provoquer des ruptures de pièces dans certains cas.

La présente invention élimine ces inconvénients, en fournissant un dispositif de freinage de sécurité composé de pièces simples n'offrant aucune difficulté de réalisation, donc garantissant un prix bas et une bonne longévité, l'ensemble du dispositif ayant un faible encombrement, ce qui facilite son adaptation, et se révélant efficace (ralentissement et arrêt obtenus en quelques secondes) sans que son fonctionnement soit trop brutal.

A cet effet, le dispositif de freinage de sécurité objet de l'invention est défini par la revendication 1 et comprend au moins une came montée pivotante autour d'un axe transversal porté par l'arbre moteur et coopérant avec un plateau mobile lié en rotation avec l'organe de travail rotatif, le plateau mobile étant situé en regard d'un plateau fixe pourvu d'une garniture de friction, et étant poussé en direction du plateau fixe par des moyens à ressort, tandis que le pivotement de la ou des cames, sous l'effet d'un couple différentiel apparaissant lorsque l'arbre moteur est entraîné, déplace axialement le plateau mobile dans le sens de son éloignement du plateau fixe, à l'encontre de l'action des moyens à ressort.

Ainsi est réalisé un dispositif de freinage qui ne nécessite aucun moyen de commande particulier, son fonctionnement résultant de la conjugaison de plusieurs phénomènes physiques et des particularités mécaniques de l'accouplement que constitue le dispositif. Plus précisément, l'action de freinage met à profit:

— la restitution de l'énergie cinétique emmagasinée par les organes tournants,

— la liaison élastique entre les parties motrice et entraînée, et

— la décélération de la partie motrice.

L'action de défreinage utilise, quant à elle:

— l'énergie de la partie motrice,

— la liaison élastique entre les parties motrice et entraînée, et

— le couple résistant, au démarrage et en cours de travail, de l'organe rotatif à entraîner.

La ou les cames doivent par leur forme, et en pivotant sous l'effet d'un couple différentiel résultant de la différence entre le couple transmis par l'arbre moteur et le couple résistant, créer un effort axial qui repousse le plateau mobile en vue de l'éloigner du plateau fixe muni de la garniture de friction, contre laquelle il est appliqué au repos par les moyens à ressorts. Dans ce but, suivant une forme de réalisation préférée de l'invention, chaque came a une forme générale triangulaire et est montée pivotante sur l'arbre moteur par l'un de ses sommets, tandis que son côté opposé à l'axe de pivotement comporte une encoche dans laquelle est engagé un ergot formé au fond d'une cloche solidaire du plateau mobile. Chaque came agit ainsi par son côté opposé à son axe de pivotement, en tournant aussi autour de l'ergot qui la positionne par rapport à la cloche solidaire du plateau mobile. Afin de favoriser le mouvement d'inclinaison de la ou des cames relativement à l'ergot correspondant, l'encoche prévue sur un côté de chaque came a avantageusement un profil ouvert en V, avec un angle au moins égal à l'angle formé par les deux autres côtés de la came.

Suivant une disposition particulière, deux cames triangulaires, situées de part et d'autre de l'arbre moteur, sont prévues, tandis que deux ergots, diamétralement opposés, sont formés au fond de la cloche solidaire du plateau mobile; lors du défreinage et en cours de travail de l'organe à l'entraîner, les deux cames sont basculées en sens inverse.

Quant aux moyens à ressort, ils peuvent être constitués par un ressort hélicoïdal entourant la cloche précitée et comprimé entre le plateau mobile et une butée à billes, elle-même appliquée contre un couvercle qui recouvre le ressort et est assemblé au plateau fixe.

Compte tenu de ce que le plateau mobile doit pouvoir s'écarter du plateau fixe, ou s'en rapprocher, la cloche solidaire du plateau mobile est de préférence liée à rotation, avec possibilité de déplacement relatif axial, à un arbre récepteur, lui-même lié à l'organe de travail rotatif. Pour la réalisation de cette liaison, l'arbre récepteur présente par exemple une lumière, traversée par un axe dont les extrémités sont liées à un manchon solidaire de la cloche.

De toute façon, l'invention sera mieux comprise à l'aide de la description qui suit, en référence au dessin schématique annexé représentant, à titre d'exemple non limitatif, une forme d'exécution de ce dispositif de freinage de sécurité.

La fig. 1 est une vue en coupe passant par l'axe d'un dispositif de freinage de sécurité conforme à l'invention, placé entre un moteur électrique et un organe de travail entraîné par ce moteur,

la fig. 2 est une vue en coupe partielle de ce dispositif, suivant 2-2 de la fig. 1,

les fig. 3 et 4 sont des vues similaires à la fig. 1, montrant deux positions de fonctionnement du dispositif, et

les fig. 5, 6 et 7 sont des schémas explicatifs simplifiés, correspondant respectivement aux positions de fonctionnement des fig. 1, 3 et 4.

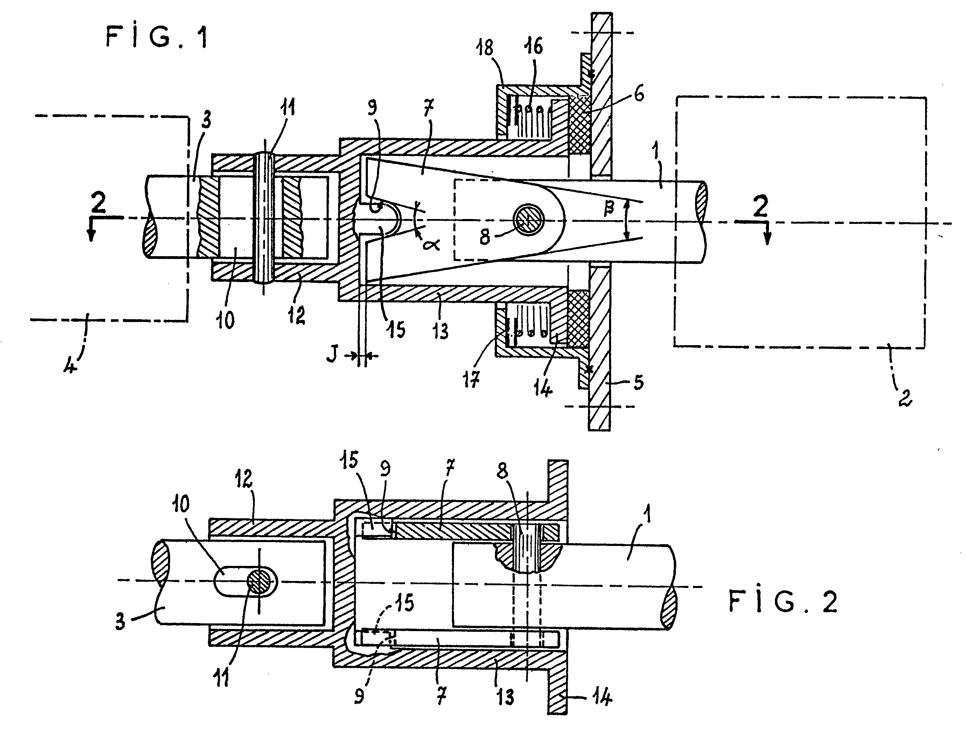

Comme le montre la fig. 1, le dispositif objet de l'invention réunit un arbre moteur 1, entraîné par un moteur électrique 2, à un arbre récepteur 3, lié à un organe de travail rotatif 4.

L'arbre moteur 1 traverse l'ouverture centrale d'un plateau fixe 5, qui porte une garniture de friction 6. Près de l'extrémité libre de l'arbre moteur 1 sont montées deux cames 7 situées de part et d'autre dudit arbre moteur 1. Les deux cames 7 pivotent autour d'un axe transversal à l'arbre moteur 1 et réalisé ici sous la forme d'une goupille 8 traversant cet arbre 1.

Chaque came 7 a une forme générale triangulaire, une encoche 9 étant prévue au milieu du côté opposé à la goupille 8 qui correspond à l'un des sommets du triangle. L'encoche 9 est ouverte en V, avec un angle $\alpha$ au moins égal à l'angle $\beta$ formé par les deux autres côtés de la came 7.

L'arbre récepteur 3 présente, près de son extrémité libre, une lumière 10 traversée par une autre goupille 11 ayant ses extrémités liées à un manchon 12 solidaire d'une cloche 13, dont l'extrémité annulaire 14 constitue un plateau mobile situé en regard de la garniture 6 portée par le plateau fixe 5. Au fond de la cloche 13 sont formés deux ergots arrondis 15, diamétralement opposés. L'extrémité de l'arbre moteur 1 et les deux cames 7 sont introduites à l'intérieur de la cloche 13, de telle manière que les deux ergots 15 soient engagés respectivement dans les encoches 9 des deux cames 7.

Un ressort hélicoïdal 16, entourant la cloche 13, est appuyé entre le plateau mobile 14 et une butée à billes 17; cette dernière est appliquée contre un couvercle 18, qui recouvre le ressort 16 et est assemblé au plateau fixe 5.

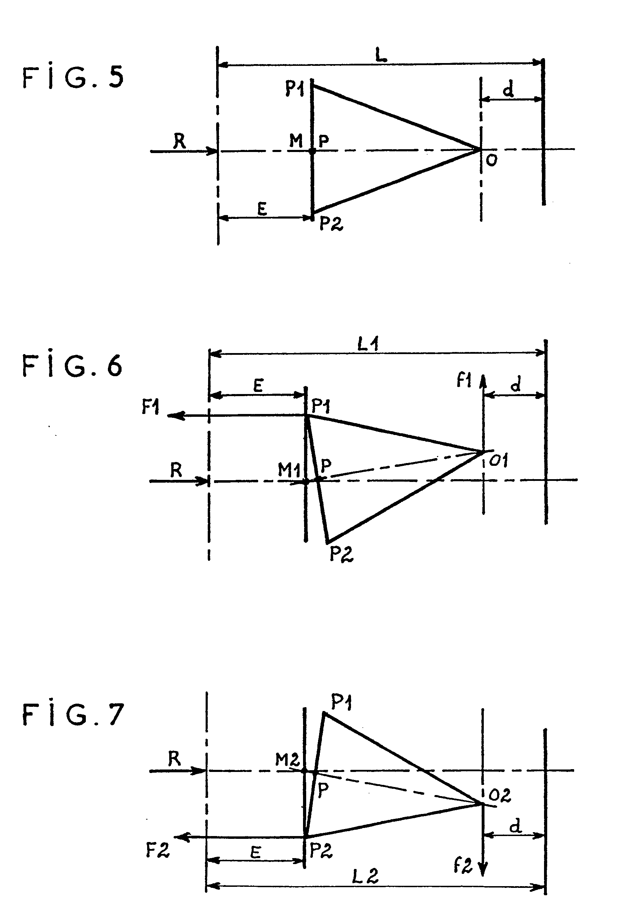

La fig. 1 représente la position de repos ou de freinage, pour laquelle les deux arbres 1 et 3 ne sont pas en mouvement, et le ressort 16 crée la seule force en action. Ce ressort 16 pousse le plateau mobile 14 contre la garniture de friction 6, tandis que les deux cames 7 restent dans l'axe de l'arbre moteur 1. Un jeu de fonctionnement J subsiste entre le fond de la cloche 13, comportant les ergots 15, et le côté de chaque came 7 sur lequel est prévue l'encoche 9, pour permettre au ressort 16 de plaquer effectivement le plateau mobile 14 sur la garniture 6. Cette position de repos est schématisée sur la fig. 5, où:

— le triangle indéformable O-P1-P2 correspond à l'une des cames 7,

— P indique le fond de l'encoche 9 et M l'ergot 15 correspondant, ici confondus,

— d représente la distance entre le sommet et l'axe de pivotement O de la came et le plateau fixe,

— E traduit la distance entre le point d'appui du ressort, dont l'effort est indiqué par R, sur le plateau mobile d'une part et le point M d'autre part, et

— la cote L, enfin, traduit la distance entre le point d'appui du ressort sur le plateau mobile et le plateau fixe, cette distance étant égale à $L=E+PO+d=E+MO+d$.

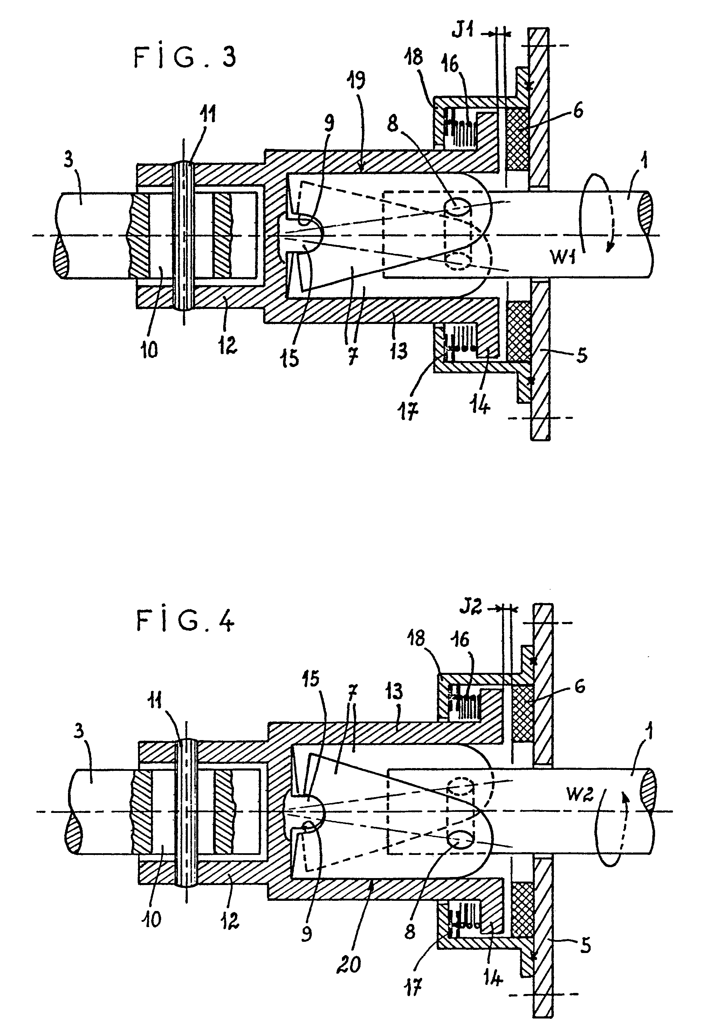

Les fig. 3 et 4 montrent les positions de défreinage, obtenues respectivement pour un sens de rotation W1 de l'arbre moteur 1 et pour le sens de rotation opposé W2. Le couple différentiel, résultant de la différence existant entre le couple transmis par l'arbre moteur 1 et le couple résistant de l'arbre récepteur 3, se traduit par des efforts tangentiels f1 ou f2 sur les extrémités de la goupille 8, et provoque le pivotement des cames 7, en sens inverse l'une de l'autre, autour des ergots respectifs 15. En s'inclinant ainsi par rapport à l'axe de l'arbre moteur 1, les deux cames 7 repoussent la cloche 13 et écartent donc le plateau mobile 14 de la garniture de friction 6, créant entre ces deux parties un jeu J1 ou J2. La lumière 10 de l'arbre récepteur 3 permet ce déplacement axial de la cloche 13 et du plateau mobile 14, sous la poussée des cames 7.

Les schémas des fig. 6 et 7 permettent de mieux analyser ce fonctionnement.

Au point M du plateau mobile, correspondant à l'un des ergots, s'exerce un effort dû au couple résistant de l'arbre récepteur, et s'opposant au couple moteur. L'effort f1 ou f2, résultant du couple différentiel, provoque le déplacement du sommet O de la came triangulaire, qui vient alors dans la position O1 (fig. 6) ou O2 (fig. 7). La came bascule ainsi, et le triangle qui la symbolise prend, selon le sens de rotation, la position O1-P1-P2 ou O2-P1-P2. Selon le pivotement de la came, le sommet P1 ou P2 de cette dernière exerce un effort F1 ou F2 qui s'oppose à l'effort R du ressort et qui repousse le point M, lequel vient en M1 ou M2, étant donné que la distance d entre le sommet de la came et le plateau fixe reste invariable. De même, l'écart E entre le point d'appui du ressort et le point M reste invariable. Ainsi, la longueur L varie comme la projection, sur l'axe du dispositif, de la distance OM, et devient selon le cas L1 ou L2. La différence L1−L ou L2−L représente le jeu J1 ou J2 indiqué sur les fig. 3 et 4; ce jeu permet le desserrage de la garniture de friction 6 et libère en rotation le plateau mobile 14. Les parties rotatives du dispositif peuvent alors tourner sans friction, grâce à la butée à billes 17.

Si l'alimentation du moteur 2 est coupée, alors que les arbres 1 et 3 sont en rotation, la suppression du couple moteur entraîne l'annulation du couple différentiel et, par conséquent, des efforts f1 ou f2 et F1 ou F2 qui s'opposent à l'effort R du ressort 16. Ce dernier repousse alors les deux cames 7, donc déplace les points P1 et P2 pour retrouver la position de repos et de freinage illustrée par les fig. 1 et 5. La rotation des arbres 1 et 3, ainsi que de l'organe de travail 4, est de cette manière rapidement arrêtée.

A l'inverse, dès que le moteur 2 est remis en marche, la présence d'un couple moteur sur l'arbre 1 et d'un couple résistant sur l'arbre 3 recrée un couple différentiel et engendre, par conséquent, les efforts f1 ou f2 et F1 ou F2 qui s'opposent à l'effort du ressort R. Les cames triangulaires 7 pivotent et provoquent l'écartement du plateau mobile 14 de la garniture de friction 16, réalisant ainsi le défreinage (voir fig. 3, 4 et 6, 7).

Afin d'éviter, en position de défreinage, un basculement trop important des cames 7, il est prévu de limiter l'inclinaison de ces cames par un système de butées. Comme le montrent les fig. 3 et 4, ce système de butées peut simplement résulter de l'application de l'un des grands côtés 19 ou 20 de chaque came triangulaire 7 contre la paroi interne de la cloche 13.

Comme il va de soi, l'invention ne se limite pas à la seule forme d'exécution de ce système de freinage de sécurité qui a été décrite ci-dessus, à titre d'exemple; elle en embrasse, au contraire, toutes les variantes de réalisation et d'application conçues suivant le même principe. Ainsi, le nombre de cames, fixé à deux dans la forme d'exécution décrite ci-dessus et représentée au dessin, peut être porté à trois ou quatre, selon la place disponible et l'importance des efforts à transmettre. Par ailleurs, pour certaines constructions simplifiées, la goupille 11 et l'arbre récepteur 3 peuvent être supprimés, le plateau mobile 14 assurant alors lui-même la fonction d'arbre récepteur. Enfin, le dispositif peut être intégré à l'intérieur du moteur, en étant notamment logé dans le flasque palier avant du moteur.

**Revendications**

1. Dispositif de freinage de sécurité, interposé entre un arbre moteur et un organe de travail rotatif, caractérisé en ce qu'il comprend au moins une came (7) montée pivotante autour d'un axe transversal (8) porté par l'arbre moteur (1) et coopérant avec un plateau mobile (13, 14) lié en rotation avec l'organe de travail rotatif (4), le plateau mobile étant situé en regard d'un plateau fixe (5) pourvu d'une garniture de friction (6), et étant poussé en direction du plateau fixe (5) par des moyens à ressort (16), tandis que le pivotement de la ou des cames (7), sous l'effet d'un couple différentiel apparaissant lorsque l'arbre moteur (1) est entraîné, déplace axialement le plateau mobile (13, 14) dans le sens de son éloignement du plateau fixe (5), à l'encontre de l'action des moyens à ressort (16).

2. Dispositif de freinage de sécurité selon la revendication 1, caractérisé en ce que chaque came (7) a une forme générale triangulaire et est montée pivotante sur l'arbre moteur (1) par l'un de ses sommets, tandis que son côté opposé à l'axe de pivotement (8) comporte une encoche (9) dans laquelle est engagé un ergot (15) formé au fond d'une cloche (13) solidaire du plateau mobile (14).

3. Dispositif de freinage de sécurité selon la revendication 2, caractérisé en ce que l'encoche (9) prévue sur un côté de chaque came (7) a un profil ouvert en V, avec un angle ($\alpha$) au moins égal à l'angle ($\beta$) formé par les deux autres côtés de la came (7).

4. Dispositif de freinage de sécurité selon l'une des revendications 2 ou 3, caractérisé en ce qu'il comprend deux cames triangulaires (7) situées de part et d'autre de l'arbre moteur (1), tandis que deux ergots (15), diamétralement opposés, sont formés au fond de la cloche (13) solidaire du plateau mobile (14).

5. Dispositif de freinage de sécurité selon l'une des revendications 2 à 4, caractérisé en ce que les moyens à ressort sont constitués par un ressort hélicoïdal (16) entourant la cloche précitée (13) et comprimé entre le plateau mobile (14) et une butée à billes (17), elle-même appliquée contre un couvercle (18) qui recouvre le ressort (16) et est assemblé au plateau fixe (5).

6. Dispositif de freinage de sécurité selon l'une des revendications 2 à 5, caractérisé en ce que la cloche (13) solidaire du plateau mobile (14) est liée en rotation, avec possibilité de déplacement relatif axial, à un arbre récepteur (3), lui-même lié à l'organe de travail rotatif (4).

7. Dispositif de freinage de sécurité selon la revendication 6, caractérisé en ce que l'arbre récepteur (3) présente une lumière (10), traversée par un axe (11) dont les extrémités sont liées à un manchon (12) solidaire de la cloche précitée (13).

8. Dispositif de freinage de sécurité selon l'une des revendications 1 à 5, caractérisé en ce que le plateau mobile (14) assure lui-même la fonction d'arbre récepteur.

9. Dispositif de freinage de sécurité selon l'une des revendications 1 à 8, caractérisé en ce qu'un système de butées (19, 20) est prévu pour limiter l'inclinaison des cames (7).

10. Dispositif de freinage de sécurité selon l'ensemble des revendications 2 et 9, caractérisé en ce que le système de butées précité résulte de l'application de l'un des grands côtés (19, 20) de chaque came triangulaire (7) contre la paroi interne de la cloche (13) solidaire du plateau mobile (14).

**Claims**

1. A safety braking device, interposed between a drive axle and a rotary working part, characterized in that it comprises at least one cam (7) mounted so as to pivot about a transverse axle (8) borne by the drive axle (1) and cooperating with a mobile plate (13, 14) rotatably connected to the rotary working part (4), the mobile plate being located opposite a fixed plate (5) provided with a friction lining (6), and being urged in the direction of the fixed plate (5) by spring means (16), whilst the pivoting of the cam or cams (7), under the effect of a differential torque which occurs when the drive axle (1) is driven, axially displaces the mobile plate (13, 14) in the direction away from the fixed plate (5) against the action of the spring means (16).

2. A safety braking device as claimed in Claim 1, characterized in that each cam (7) is of a generally triangular shape and is pivotally mounted on the drive axle (1) by means of one of its vertices, whilst its side opposite the pivot axle (8) comprises a notch (9) in which there engages a tappet (15) formed at the base of bell (13) rigid with the mobile plate (14).

3. A safety braking device as claimed in Claim 2, characterized in that the notch (9) provided on one side of each cam (7) has an open V-shaped profile with an angle ($\alpha$) at least equal to the angle ($\beta$) formed by the two other sides of the cam (7).

4. A safety braking device as claimed in one of Claims 2 or 3, characterized in that it comprises two triangular cams (7) located on either side of the drive axle (1), whilst two diametrically opposed tappets (15) are formed at the base of the bell (13) rigid with the mobile plate (14).

5. A safety braking device as claimed in one of Claims 2 to 4, characterized in that the spring means are formed by a helical spring (16) surrounding the above-mentioned bell (13) and compressed between the mobile plate (14) and a thrust ball bearing (17) which is itself applied against a cover (18) which covers the spring (16) and is coupled to the fixed plate (5).

6. A safety braking device as claimed in one of Claims 2 to 5, characterized in that the bell (13) rigid with the mobile plate (14) is rotatably connected, with the possibility of relative axial displacement, to an output shaft (3), itself connected to the rotary working part (4).

7. A safety braking device as claimed in Claim 6, characterized in that the output shaft (3) has a slot (10) through which there passes an axle (11) whose ends are connected to a sleeve (12) rigid with the above-mentioned bell (13).

8. A safety braking device as claimed in one of Claims 1 to 5, characterized in that the mobile plate (14) itself ensures the function of the output shaft.

9. A safety braking device as claimed in one of Claims 1 to 8, characterized in that a system of stops (19, 20) is provided for limiting the tilting of the cams (7).

10. A safety braking device as claimed in Claims 2 and 9 together, characterized in that the above-mentioned stop system results from the application of one of the long sides (19, 20) of each triangular cam (7) against the internal wall of the bell (13) rigid with the mobile plate (14).

**Patentansprüche**

1. Sicherheitsbremsvorrichtung, eingesetzt zwischen einer Antriebswelle und einem rotierenden Arbeitsteil, dadurch gekennzeichnet, dass sie mindestens ein Nockenstück (7) aufweist, das schwenkbar um eine von der Antriebswelle (1) getragene Querachse (8) montiert ist und mit einer beweglichen Platte (13, 14) zusammenwirkt, die in Drehverbindung mit dem rotierenden Arbeitsteil (4) steht, wobei die bewegliche Platte gegenüberliegend einer mit einem Reibbelag (6) versehenen ortsfesten Platte (5) liegt und in Richtung der ortsfesten Platte (5) durch Federmittel (6) gedrückt ist, während die Verschwenkung des oder der Nockenstücke (7) unter der Wirkung eines beim Antreiben der Antriebswelle (1) auftretenden Differenzmomentes die bewegliche Platte (13, 14) axial in Richtung ihrer Entfernung von der ortsfesten Platte (5) gegen die Kraft der Federmittel (16) verlagert.

2. Sicherheitsbremsvorrichtung nach Anspruch 1, dadurch gekennzeichnet, dass jedes Nockenstück (7) eine im wesentlichen dreieckige Form hat und mit einer seiner Spitzen schwenkbar an der Antriebswelle (1) gelagert ist, während seine der Schwenkachse (8) gegenüberliegende Seite eine Ausnehmung (9) aufweist, in die ein Zapfen (15) eingreift, der auf dem Boden einer fest mit der beweglichen Platte (14) verbundenen Glocke (13) gebildet ist.

3. Sicherheitsbremsvorrichtung nach Anspruch 2, dadurch gekennzeichnet, dass die auf der einen Seite eines jeden Nockenstückes (7) vorgesehene Ausnehmung (9) ein V-förmiges offenes Profil hat, mit einem Winkel ($\alpha$) mindestens gleich dem Winkel ($\beta$), der von den beiden anderen Seiten des Nockenstückes (7) gebildet ist.

4. Sicherheitsbremsvorrichtung nach einem der Ansprüche 2 oder 3, dadurch gekennzeichnet, dass sie zwei dreieckige Nockenstücke (7) aufweist, die beidseitig an der Antriebswelle (1) angeordnet sind, während zwei einander diametral gegenüberliegende Zapfen (15) am Boden der fest mit der beweglichen Platte (14) verbundenen Glocke (13) gebildet sind.

5. Sicherheitsbremsvorrichtung nach einem der Ansprüche 2 bis 4, dadurch gekennzeichnet, dass die Federmittel aus einer die genannte Glocke (13) umgebenden Schraubfeder (16) gebildet sind, und dass die Schraubfeder zwischen der beweglichen Platte (14) und einem mit Kugeln versehenen Anschlag (17) zusammengedrückt ist, der seinerseits gegen einen Deckel (18) angedrückt ist, der die Feder (16) überdeckt und an der ortsfesten Platte (5) angebracht ist.

6. Sicherheitsbremsvorrichtung nach einem der Ansprüche 2 bis 5, dadurch gekennzeichnet, dass die fest mit der beweglichen Platte (14) verbundene Glocke (13) mit der Möglichkeit einer axialen Relativverlagerung in Drehverbindung mit einer Abtriebswelle (3) steht, die ihrerseits mit dem rotierenden Arbeitsteil (4) verbunden ist.

7. Sicherheitsbremsvorrichtung nach Anspruch 6, dadurch gekennzeichnet, dass die Abtriebswelle (3) einen Schlitz (10) aufweist, der von einer Achse (11) durchquert ist, dessen Enden mit einem Stutzen (12) verbunden sind, der seinerseits fest mit der genannten Glocke (13) verbunden ist.

8. Sicherheitsbremsvorrichtung nach einem der Ansprüche 1 bis 5, dadurch gekennzeichnet, dass die bewegliche Platte (14) selbst die Funktion der Abtriebswelle hat.

9. Sicherheitsbremsvorrichtung nach einem der Ansprüche 1 bis 8, dadurch gekennzeichnet, dass ein System von Anschlägen (19, 20) zur Begrenzung der Neigung der Nockenstücke (7) vorgesehen ist.

10. Sicherheitsbremsvorrichtung nach den Ansprüchen 2 und 9, dadurch gekennzeichnet, dass das genannte Anschlagsystem aus der Andrückkung der einen der grossen Längsseiten (19, 20)

FIG. 1

FIG. 2

0 069 032

FIG.3

FIG.4

FIG.5

FIG.6

FIG.7